# FASCICULE DE BREVET EUROPEEN

(11) **EP 3 048 710 B1**
(45) Date de publication et mention de la délivrance du brevet: **26.10.2022**
(21) Numéro de dépôt: 15305058.8
(22) Date de dépôt: 20.01.2015
(51) Int. Cl.: H02K 17/16, H02K 15/00

(54) **ROTOR, PROCÉDÉ DE FABRICATION ET MACHINE ÉLECTRIQUE CORRESPONDANTS**
ROTOR, ENTSPRECHENDES HERSTELLUNGSVERFAHREN UND ENTSPRECHENDE ELEKTRISCHE MASCHINE
ROTOR, CORRESPONDING MANUFACTURING METHOD AND CORRESPONDING ELECTRIC MACHINE

(43) Date de publication de la demande: 27.07.2016
(73) Titulaire: GE Energy Power Conversion Technology Ltd, Rugby Warwickshire CV21 1BU (GB)
(72) Inventeur: Bittermann, Mathieu, 54320 Maxeville (FR); Le Flem, Graham, Warwickshire, CV23 0SU (GB)
(74) Mandataire: Casalonga

(56) Documents cités:
- JP-A- S60 255 045
- JP-A- 2008 278 642
- JP-U- S 599 741
- JP-U- H0 241 672

## Description

La présente invention concerne une masse magnétique pour un rotor de machine électrique et concerne également un tel rotor. La présente invention concerne également une machine électrique comprenant un tel rotor. La présente invention se rapporte également à un procédé de fabrication d'un tel rotor.

Le document EP-A-0 609 645 décrit un rotor comprenant une masse magnétique et une cage de court-circuit. La cage de court-circuit comprend deux couronnes de court-circuit et une pluralité de barres conductrices chacune reliant électriquement les couronnes de court-circuit.

Toutefois, un tel rotor présente un facteur de puissance relativement faible, de l'ordre de 0,7 à 0,8. Pour une machine électrique, le facteur de puissance est défini comme le rapport entre la puissance active et la puissance apparente. Plus le facteur de puissance est de valeur importante, se rapprochant de la valeur 1, moins il faut de courant d'excitation au rotor, une valeur de couple mécanique plus important au rotor étant ainsi disponible pour la même puissance électrique aux bornes de la machine électrique.

Les documents JPS599741, JPS60255045, JP2008278642 et JPH0241672U divulguent chacun un rotor selon l'état de la technique.

Le but de l'invention est de proposer un rotor permettant un facteur de puissance de valeur plus importante pour la machine électrique.

A cet effet, l'invention a pour objet un rotor selon la revendication 1.

Suivant des modes de réalisation particuliers, la masse magnétique comprend une ou plusieurs des caractéristiques suivantes, prise(s) isolément ou suivant toutes combinaisons techniquement possibles :
- chaque ouverture s'étend sur toute la longueur de la masse magnétique suivant l'axe longitudinal ;
- la masse magnétique est délimitée par une périphérie suivant un plan perpendiculaire à l'axe longitudinal, chaque ouverture s'étendant entre deux bords longitudinaux à la périphérie de la masse magnétique, la distance entre les deux bords étant comprise entre 4 mm et 10 mm ;
- le nombre d'ouvertures est égal au nombre de logements et chaque ouverture s'étend radialement à partir d'un des logements respectifs et débouchant vers l'extérieur suivant une direction radiale ;
- la deuxième portion de forme sensiblement trapézoïdale comporte une petite base radialement extérieure et une grande base, la petite base étant disposée à l'extérieur de la grande base suivant la direction radiale, la deuxième portion de forme sensiblement trapézoïdale comprenant un côté reliant la petite base à la grande base, ledit côté formant avec la hauteur passant par un des points dudit côté un angle compris entre 5° et 25°, de préférence sensiblement égal à 15°.

En outre, l'invention se rapporte à une machine électrique, en particulier machine asynchrone, notamment moteur, comprenant un stator et un rotor tel que défini ci-dessus.

L'invention concerne également un procédé de fabrication d'un rotor selon la revendication 7.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1 est une vue schématique en coupe axiale d'une machine électrique selon l'invention,
- la figure 2 est une vue coupe transversale d'une partie du rotor de la machine de la figure 1,
- la figure 3 est une vue en coupe axiale selon la ligne III - III de la figure 2, et
- la figure 4 est un agrandissement de la zone encerclée IV de la figure 2.

De façon conventionnelle dans la présente demande, l'expression « sensiblement égal à » exprimera une relation d'égalité à plus ou moins 5%.

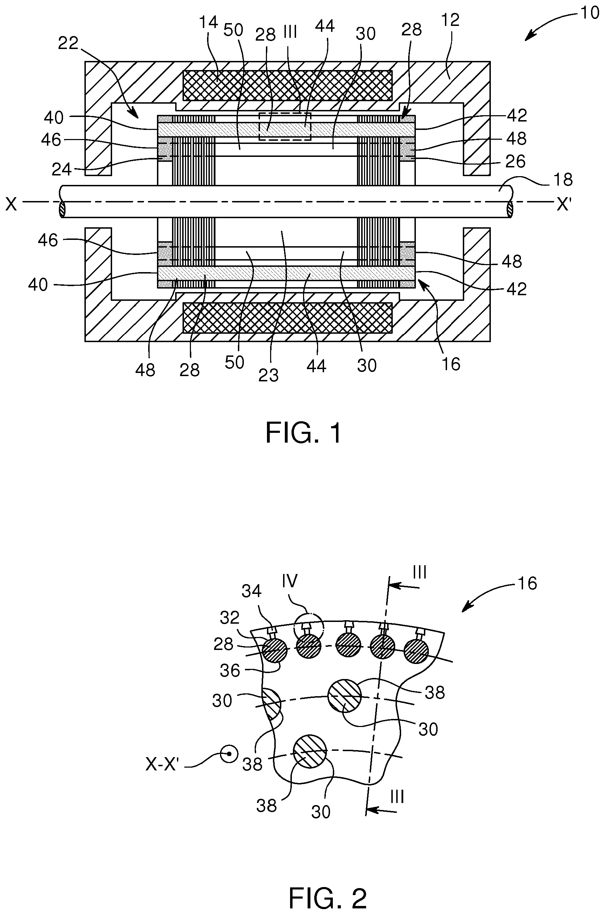

Sur la figure 1 est représentée une machine électrique selon l'invention, désignée par la référence générale 10. La machine électrique 10 est, de préférence, une machine asynchrone, notamment un moteur asynchrone.

La machine 10 comprend une carcasse 12, un stator 14, un rotor 16 et un arbre 18.

La machine 10 est adaptée pour fonctionner à des très hautes vitesses de rotation, par exemple allant de 3 000 tours par minute à 20 000 tours par minute et est de forte puissance électrique, par exemple supérieure à 10 MégaWatts (MW), de préférence supérieure à 50 MW.

La carcasse 12 et le stator 14 sont des éléments connus, et ne sont donc pas décrits plus en détail.

Le rotor 16 définit un axe de rotation X-X' également appelé axe longitudinal. Dans ce qui suit, les expressions « axialement », « radialement » et « circonférentiellement » seront utilisées par rapport à l'axe X-X'.

Le rotor 16 est solidaire de l'arbre 18, et comprend une cage de court-circuit 22 et une masse magnétique 23.

Le rotor 16 est un rotor de masse importante, par exemple supérieure à 1000 kilogrammes (kg), de préférence supérieure à 10 000 kilogrammes.

La cage de court-circuit 22 comprend une première couronne de court-circuit 24 électrique, une deuxième couronne de court-circuit 26 électrique et une pluralité de barres électriquement conductrices 28.

La masse magnétique 23 comporte un empilement de tôles rotoriques et des tirants 30 de maintien de l'empilement.

La masse magnétique 23 s'étend selon un axe longitudinal X-X' et est délimitée par une périphérie.

La masse magnétique 23 comporte une pluralité de logements de barre 32, une pluralité de trous longitudinaux traversants 38 aptes à recevoir les tirants 30, une pluralité d'ouvertures 34 et une pluralité de bouchons 35.

La première couronne de court-circuit 24 et la deuxième couronne de court-circuit 26 sont identiques.

Chaque couronne de court-circuit 24, 26 est un disque circulaire disposé coaxialement à l'axe de rotation X-X'. La première couronne de court-circuit 24 est disposée d'un côté axial de la masse magnétique 23 tandis que la deuxième couronne de court-circuit 26 est disposée de l'autre côté axial de la masse magnétique 23.

Chaque couronne de court-circuit 24, 26 est fixée axialement par rapport à la masse magnétique 23 ou par rapport à l'arbre 18. Chaque couronne de court-circuit 24, 26 est, par exemple, frettée sur l'arbre 18 ou fixée à la masse magnétique 23. En variante, la couronne de court-circuit 24, 26 est fixée à toute autre pièce intermédiaire solidaire de l'arbre 18 ou de la masse magnétique 23.

Chaque couronne de court-circuit 24, 26 est, par exemple, fabriquée en métal, de préférence fabriquée en cuivre. De préférence, chaque couronne de court-circuit 24, 26 est fabriquée d'un seul tenant, notamment d'une seule pièce.

Chaque couronne de court-circuit 24, 26 est munie d'une pluralité de cavités axiales 36, 38. Chaque première cavité axiale 36 est propre à recevoir une barre 28 respective. Chaque deuxième cavité axiale 38 est propre à recevoir un tirant 30 respectif.

Chaque barre 28 comporte une première partie d'extrémité 40, une deuxième partie d'extrémité 42 et une partie médiane 44 s'étendant entre les parties d'extrémités 40, 42. Les barres 28 sont, par exemple, fabriquées en métal, tel que du cuivre. Les barres 28 sont disposées parallèlement à l'axe de rotation X-X. En outre, la partie médiane 44 a une section circulaire.

Chaque barre 28 est fabriquée d'un seul tenant, et notamment d'une seule pièce. La première partie d'extrémité 40 est liée mécaniquement et électriquement à la première couronne de court-circuit 24. La seconde partie d'extrémité 42 est également liée électriquement et mécaniquement à la seconde couronne de court-circuit 26.

Chaque tirant 30 comporte une première partie d'extrémité 46, une deuxième partie d'extrémité 48 et une partie médiane 50 s'étendant entre les parties d'extrémités 46, 48. Les tirants 30 sont dans un matériau présentant une rigidité plus importante que le matériau des barres 28. Les tirants 30 sont disposés parallèlement à l'axe de rotation X-X'. En outre, la partie médiane 50 des tirants 30 a une section circulaire. Chaque tirant 30 est fabriqué d'un seul tenant, et notamment d'une seule pièce. Les tirants 30 permettent d'assurer le maintien mécanique de l'empilement de tôles rotoriques par appui contre les couronnes des courts-circuits 24, 26.

Le nombre de logements 32 de barre est le même que le nombre de barres 28. Ainsi, à chaque barre 28, est associé un logement de barre 32 respectif. Chaque logement 32 de barre a une section transversale complémentaire de la partie médiane 44 de la barre 28. Cette section transversale est donc circulaire dans l'exemple présenté. Chaque logement 32 présente un diamètre noté Φ1 dans la suite. En outre, chaque logement 32 se prolonge au niveau des couronnes de court-circuit 24, 26 dans deux premières cavités axiale 36.

Le nombre de trous longitudinaux traversant 38 est le même que le nombre de tirants 30. Ainsi, à chaque tirant 30, est associé un trou longitudinal traversant 38 respectif. Chaque trou longitudinal traversant 38 a une section transversale complémentaire de la partie médiane 50 du tirant 30. Cette section transversale est donc circulaire dans l'exemple présent. En outre, chaque trou 38 se prolonge au niveau des couronnes de court-circuit 24, 26.

Le nombre d'ouvertures 34 est égal au nombre de logements 32. Ainsi, à chaque ouverture 34, est associé un logement de barre 32 respectif.

Chaque ouverture 34 s'étend radialement à partir d'un des logements 32 respectifs et débouche vers l'extérieur de la masse magnétique 23 suivant une direction radiale sensiblement perpendiculaire à l'axe longitudinal X-X'.

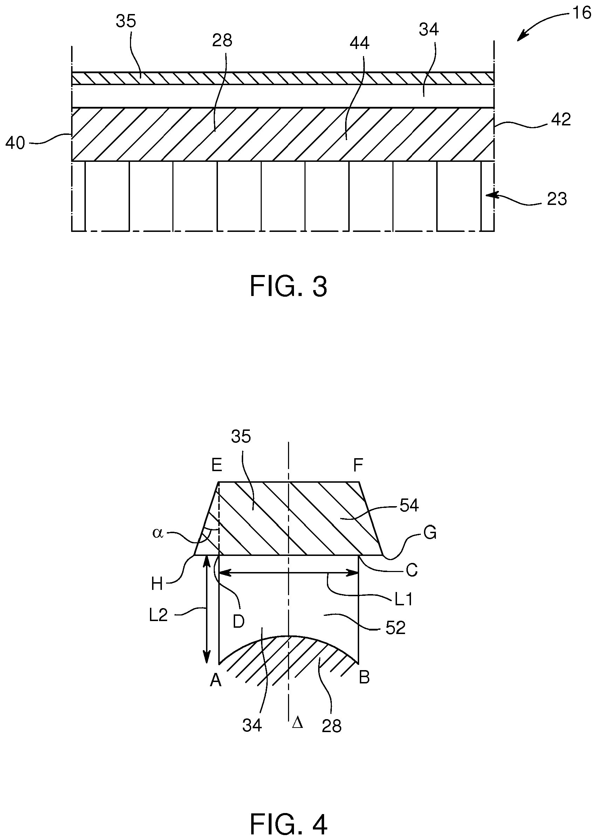

Comme visible à la figure 3, chaque ouverture 34 s'étend sur toute la longueur suivant l'axe longitudinal X-X' de la masse magnétique 23. En variante, certaines ouvertures 34 s'étendent seulement sur une partie de la longueur suivant l'axe longitudinal X-X' de la masse magnétique 23.

Ainsi que le montrent les figures 2 et 4, l'ouverture 34 est une rainure dont la section transversale perpendiculaire à l'axe longitudinal X-X' de l'ouverture 34 est sensiblement constante le long de l'axe longitudinal X-X'.

La section transversale de l'ouverture 34 est détaillée à la figure 4. La section transversale de l'ouverture 34 comprend deux portions 52, 54. La première portion 52 s'étend entre une partie du logement de barre 32 et la deuxième portion 54. La deuxième portion 54 débouche à partir de la première portion 52 vers l'extérieur de la masse magnétique 23.

La première portion 52 a sensiblement la forme d'un rectangle ABCD. La première portion 52 présente une longueur notée L1 et une largeur notée L2. Comme visible à la figure 4, L1 = AB = CD et L2 = AD = BC.

Le rapport entre la longueur L1 de la première portion 52 et le diamètre Φ1 du logement 32 est compris entre 0,1 et 0,4. De préférence, le rapport entre la longueur L1 de la première portion 52 et le diamètre Φ1 du logement 32 est compris 0,2 et 0,3. Préférentiellement, le rapport entre la longueur L1 de la première portion 52 et le diamètre Φ1 du logement 32 est égal à 0,25. Le diamètre Φ1 du logement 32 est, par exemple, compris entre 10 mm et 50 mm, de préférence compris entre 30 et 40 mm.

La longueur L1 de la première portion 52 est, par exemple, comprise entre 4 millimètre (mm) et 10 mm. De préférence, la longueur L1 est sensiblement égale à 8 mm.

La largeur L2 de la première portion 52 est, par exemple, comprise entre 4 mm et 10 mm. De préférence, la longueur L2 est sensiblement égale à 6 mm.

La deuxième portion 54 a la forme d'un trapèze EFGH isocèle. Le trapèze EFGH comporte une petite base EF et une grande base GH. La première portion 52 débouche dans la deuxième portion 54 au niveau de la grande base GH sensiblement en son milieu. Autrement formulé, les médiatrices de la grande base GH et du segment CD de la première portion 52 sont confondues. La droite Δ correspondante est représentée sur la figure 4. Préférentiellement, la longueur L1 de la première portion 52 est égale à la longueur de la petite base EF du trapèze EFGH.

Le rapport de taille entre la petite base EF et la grande base est tel que l'angle α formé par le côté EH et la hauteur passant par E est compris entre 5° et 25°, de préférence sensiblement égal à 15°.

La petite base EF présente une longueur comprise entre 4 mm et 10 mm. De préférence, la longueur de la petite base EF est égale à 8 mm. Autrement formulé, chaque ouverture 34 s'étend entre deux bords longitudinaux E et F à la périphérie de la masse magnétique 23, la distance entre les deux bords étant comprise entre 4 mm et 10 mm.

La longueur de la hauteur du trapèze EFGH est comprise entre 4 mm et 10 mm. De préférence, la longueur de la hauteur est égale à 8 mm.

Chaque bouchon 35 est en matériau isolant électriquement.

Chaque bouchon 35 est agencé dans chaque ouverture 34 de manière à obturer chaque ouverture 34 sur au moins une partie de la longueur de l'ouverture 34 suivant l'axe longitudinal X-X'.

Le bouchon 35 est de forme complémentaire à la forme de la deuxième portion 54. En l'occurrence, la section perpendiculaire à l'axe longitudinal X-X' du bouchon 35 est constante le long de l'axe longitudinal X-X' et selon la section perpendiculaire, la forme du bouchon 35 est trapézoïdale. En variante, le bouchon 35 obture la première portion 52 et la deuxième portion 54.

Le bouchon 35 permet d'isoler l'ouverture 34 de l'extérieur, et notamment d'éviter que de la poussière ne vienne se déposer dans l'ouverture 34. Le bouchon 35 permet aussi de réduire le bruit de sifflement généré par l'ouverture 34 lorsque le rotor 16 est en rotation. Le bouchon 35 réduit également les pertes de friction dans l'air lorsque le rotor 16 est en rotation, puisque la surface extérieure de la masse magnétique 23 est plus lisse, moins « accidentée » et moins rugueuse, quand les ouvertures 34 sont pourvues de bouchons 35. Le choix de l'angle α permet d'avoir un effet autobloquant du bouchon 35 dans la deuxième portion 54 de forme trapézoïdale par la force radiale extérieure exercée sur le bouchon 35 par la force centrifuge en rotation. Un angle α de valeur trop faible engendre un déplacement radial vers l'extérieur trop important du bouchon 35 sous l'effet de la force centrifuge. En variante, il peut y avoir une circulation d'air dans la première portion 52 non obturée, afin d'enlever les calories à la barre 28 parcourue par un courant électrique et ainsi réduire l'échauffement de la barre 28. L'espace vide de la première portion 52 entre le bouchon 35 dans la deuxième portion 54 et la barre 28 constitue en variante un canal de ventilation.

Le rotor 16 est avantageusement fabriqué comme suit.

Tout d'abord, les différentes tôles magnétiques rotoriques composant la masse magnétique 23 sont découpées avec le profil tel que décrit en référence à la figure 2. Ainsi les logements 32, les ouvertures 34 et les trous longitudinaux 38 sont réalisés par découpage des tôles rotoriques de la masse magnétique 23. En variante, les logements 32, les ouvertures 34 et les trous longitudinaux 38 sont réalisés par usinage de la masse magnétique 23.

La fabrication de la masse magnétique 23 comprend l'insertion des tirants 30 dans les trous longitudinaux 38. La masse magnétique 23 est donc particulièrement facile à fabriquer, en compactant l'ensemble des tôles rotoriques sous pression axiale par l'effort de tension des tirants 30 de maintien de l'empilement.

Puis les barres 28 sont disposées autour de la masse magnétique 23 dans leur logement 32 respectif, et sont reliées mécaniquement et électriquement aux couronnes de court-circuit 24, 26. Enfin, les bouchons 35 sont insérés dans les ouvertures 34 dans la deuxième portion 54. En variante, les bouchons 35 sont insérés dans les ouvertures 34 avant d'insérer les barres 28 dans leur logement 32.

L'homme du métier comprendra l'intérêt des ouvertures 34 et de leur profil particulier tel que présenté à la figure 4, appliquées aux machines électriques, de préférence asynchrones, de forte puissance et fonctionnant à des très hautes vitesses de rotation. De tels rotors 16 sans ouverture 34 présentent un facteur de puissance relativement faible de l'ordre de 0,7 à 0,8, mais avec également le risque de ne pas maitriser sa valeur entre le calcul prédictif et sa mesure effective lors de l'essai de l'exploitation de la machine électrique.

En effet, les lignes de flux magnétique ont tendance à se concentrer à la périphérie de la masse magnétique 23. La densité de ces lignes de flux magnétique est importante, ce qui engendre une forte induction dans la périphérie de la masse magnétique 23, notamment dans la zone située entre les barres 28 de la cage de court-circuit et le diamètre extérieur des tôles magnétiques rotoriques. La distance radiale entre la barre 28 et la périphérie de la masse magnétique 23 est minimale à cet endroit, provoquant une densité de lignes de flux magnétique et une induction associée de valeurs importantes. Ceci induit une saturation à cet endroit dans les tôles magnétiques rotoriques, et donc augmente le courant d'excitation du rotor.

La saturation rend difficile le calcul précis du point de fonctionnement électrique de la machine électrique tournante, et donc rend difficile d'établir avec précision la valeur du facteur de puissance d'une machine électrique avec un tel rotor 16 sans ouverture 34.

Les ouvertures 34 interrompent la conduction du flux magnétique en périphérie de la masse magnétique 23. Les lignes de flux magnétiques du rotor se referment avec celles du stator en passant depuis la périphérie de la masse magnétique 23 entre les barres 28 en faisant le tour des barres 28, les lignes de flux ne pouvant plus passer en périphérie de la masse magnétique 23 interrompue par les ouvertures 34. Ainsi, il y a moins de densité de lignes de flux car il y plus d'espace dans les tôles magnétiques entre et autour des barres 28 qu'entre les barres 28 et la périphérie des tôles magnétiques rotoriques. L'invention présente donc l'avantage d'éviter une saturation des tôles magnétiques rotoriques pour des machines électriques asynchrones de forte puissance et haute vitesse de rotation, ce qui permet de réduire le courant d'excitation du rotor 16, d'augmenter le facteur de puissance à une valeur supérieure à 0,8, de préférence supérieure ou égale à 0,85, et d'en maitriser la valeur par absence de saturation dans les tôles rotoriques de la masse magnétique 23.

## Revendications

1. Rotor (16) de machine électrique comprenant :
- une masse magnétique (23) s'étendant selon un axe longitudinal (X-X') comportant une pluralité de logements (32), chaque logement (32) étant destiné à recevoir une barre (28) électriquement conductrice respective, et au moins sur une partie de sa longueur suivant l'axe longitudinal (X-X') au moins une ouverture (34) s'étendant radialement à partir d'un des logements (32) et débouchant vers l'extérieur suivant une direction radiale, sensiblement perpendiculaire à l'axe longitudinal (X-X'), chaque ouverture étant en forme d'une rainure dont la section transversale perpendiculaire à l'axe longitudinal (X-X') comprend :
• une première portion (52) de forme sensiblement rectangulaire, la première portion (52) débouchant vers un des logements (32), et
• une deuxième portion (54) de forme sensiblement trapézoïdale dans laquelle débouche la première portion (52), la deuxième portion (54) débouche vers l'extérieur de la masse magnétique suivant une direction radiale,
- une cage de court-circuit (22) s'étendant selon l'axe longitudinal (X-X') et comportant :
• deux couronnes de court-circuit (24, 26) placées de part et d'autre de la masse magnétique (23) suivant l'axe longitudinal (X-X'),
• une pluralité de barres (28) électriquement conductrices, chacune reliant électriquement les deux couronnes de court-circuit (24, 26),
**caractérisé en ce que** le rotor comprend au moins un bouchon (35) isolant électrique, le ou les bouchons étant agencés à l'intérieur de la ou chaque ouverture de manière à obturer la ou chaque ouverture sur au moins une partie de sa longueur suivant l'axe longitudinal.

2. Rotor selon la revendication 1, dans lequel chaque ouverture (34) s'étend sur toute la longueur de la masse magnétique (23) suivant l'axe longitudinal (X-X').

3. Rotor selon la revendication 1 ou 2, dans lequel la masse magnétique (23) est délimitée par une périphérie suivant un plan perpendiculaire à l'axe longitudinal (X-X'), chaque ouverture (34) s'étendant entre deux bords longitudinaux à la périphérie de la masse magnétique (23), la distance entre les deux bords étant comprise entre 4 mm et 10 mm.

4. Rotor selon l'une quelconque des revendications 1 à 3, dans lequel le nombre d'ouvertures (34) est égal au nombre de logements (32) et dans lequel chaque ouverture (34) s'étend radialement à partir d'un des logements (32) respectifs et débouchant vers l'extérieur suivant une direction radiale.

5. Rotor selon l'une quelconque des revendications 1 à 4, dans lequel la deuxième portion (54) de forme sensiblement trapézoïdale comporte une petite base radialement extérieure et une grande base, la petite base étant disposée à l'extérieur de la grande base suivant la direction radiale, et dans lequel la deuxième portion (54) de forme sensiblement trapézoïdale comprend un côté reliant la petite base à la grande base, ledit côté formant avec la hauteur passant par un des points dudit côté un angle compris entre 5° et 25°, préférentiellement sensiblement égal à 15°.

6. - Machine électrique (10), en particulier machine asynchrone, notamment moteur (10), comprenant un stator (14) et un rotor (16), **caractérisé en ce que** le rotor (16) est un rotor (16) conforme à l'une quelconque des revendications 1 à 5.

7. - Procédé de fabrication d'un rotor selon l'une quelconque des revendications 1 à 6 comprenant une étape de :
- réalisation d'une masse magnétique (23) s'étendant selon un axe longitudinal (X-X') comportant :
• une pluralité de logements (32), chaque logement (32) étant propre à recevoir une barre (28) de la pluralité de barres (28),
• sur au moins une partie de sa longueur suivant l'axe longitudinal (X-X') au moins une ouverture (34) s'étendant radialement à partir d'un des logements (32) et débouchant vers l'extérieur suivant une direction radiale sensiblement perpendiculaire à l'axe longitudinal (X-X');
- réalisation d'une cage de court-circuit (22) s'étendant selon l'axe longitudinal (X-X') et comportant :
• deux couronnes de court-circuit (24, 26) placées de part et d'autre de la masse magnétique (23) suivant l'axe longitudinal (X-X'), et
• une pluralité de barres (28) électriquement conductrices, chacune reliant électriquement les deux couronnes de court-circuit (24, 26), et
- d'insertion d'au moins un bouchon (35) isolant électrique, le ou les bouchons (35) étant agencés à l'intérieur de la ou chaque ouverture (34) de manière à obturer la ou chaque ouverture (34) sur au moins une partie de sa longueur suivant l'axe longitudinal (X-X').

## Patentansprüche

1. Rotor (16) einer elektrischen Maschine, umfassend:
- eine magnetische Masse (23), die sich entlang einer Längsachse (X-X') erstreckt, eine Vielzahl von Sitzen (32) beinhaltend, wobei jeder Sitz (32) bestimmt ist, um einen jeweiligen elektrisch leitfähigen Stab (28) aufzunehmen, und mindestens an einem Teil ihrer Länge, der Längsachse (X-X') folgend, mindestens eine Öffnung (34), die sich radial von einem der Sitze (32) erstreckt und einer radialen Richtung folgend, die im Wesentlichen senkrecht zur Längsachse (X-X') ist, nach außen mündend, wobei jede Öffnung die Form einer Nut hat, deren Querschnitt senkrecht zur Längsachse (X-X') umfasst:
• einen ersten Bereich (52) von im Wesentlichen rechteckiger Form, wobei der erste Bereich (52) zu einem der Sitze (32) mündet, und
• einen zweiten Bereich (54) von im Wesentlichen trapezförmiger Form, in den der erste Bereich (52) mündet, wobei der zweite Bereich (54) nach außerhalb der magnetische Masse mündet, einer radialen Richtung folgend,
- einen Kurzschlusskäfig (22), der sich entlang der Längsachse (X-X') erstreckt und beinhaltend:
• zwei Kurzschlusskränze (24, 26), die beiderseits der magnetischen Masse (23) der Längsachse (X-X') folgend positioniert sind,
• eine Vielzahl von elektrisch leitfähigen Stäben (28), die jeweils die zwei Kurzschlusskränze (24, 26) elektrisch verbinden,
**dadurch gekennzeichnet, dass** der Rotor mindestens einen elektrisch isolierenden Stopfen (35) umfasst, wobei der oder die Stopfen innerhalb der oder jeder Öffnung so eingerichtet sind, dass sie die oder jede Öffnung an mindestens einem Teil ihrer Länge, die der Längsachse folgt, verschließen.

2. Rotor nach Anspruch 1, wobei sich jede Öffnung (34) über die gesamte Länge der magnetischen Masse (23), der Längsachse (X-X') folgend, erstreckt.

3. Rotor nach Anspruch 1 oder 2, wobei die magnetische Masse (23) durch einen Umfang begrenzt ist, der einer Ebene senkrecht zur Längsachse (X-X') folgt, wobei sich jede Öffnung (34) zwischen zwei Kanten längs zum Umfang der magnetischen Masse (23) erstreckt, wobei der Abstand zwischen den zwei Kanten zwischen 4 mm und 10 mm beträgt.

4. Rotor nach einem der Ansprüche 1 bis 3, wobei die Anzahl der Öffnungen (34) gleich der Anzahl der Sitze (32) ist und wobei sich jede Öffnung (34) radial von einem der jeweiligen Sitze (32) erstreckt und einer radialen Richtung folgend nach außen mündend.

5. Rotor nach einem der Ansprüche 1 bis 4, wobei der zweite Bereich (54) von im Wesentlichen trapezförmiger Form eine kleine radial äußere Basis und eine große Basis beinhaltet, wobei die kleine Basis außerhalb der großen Basis, der radialen Richtung folgend, angeordnet ist, und wobei der zweite Bereich (54) von im Wesentlichen trapezförmiger Form eine Seite umfasst, die die kleine Basis mit der großen Basis verbindet, wobei die Seite mit der Höhe, durch einen der Punkte auf der Seite verlaufend, einen Winkel zwischen 5° und 25° bildet, vorzugsweise im Wesentlichen gleich 15°.

6. Elektrische Maschine (10), besonders Asynchronmaschine, insbesondere Motor (10), einen Stator (14) und einen Rotor (16) umfassend, **dadurch gekennzeichnet, dass** der Rotor (16) ein Rotor (16) nach einem der Ansprüche 1 bis 5 ist.

7. Fertigungsverfahren eines Rotors nach einem der Ansprüche 1 bis 6, einen Schritt umfassend, aus:
- Herstellung einer magnetischen Masse (23), die sich entlang einer Längsachse (X-X') erstreckt, beinhaltend:
• eine Vielzahl von Sitzen (32), wobei jeder Sitz (32) geeignet ist, einen Stab (28) der Vielzahl von Stäben (28) aufzunehmen,
• an mindestens einem Teil ihrer Länge, der Längsachse (X-X') folgend, mindestens eine Öffnung (34), die sich radial von einem der Sitze (32) erstreckt und einer radialen Richtung folgend nach außen mündend, die im Wesentlichen senkrecht zur Längsachse (X-X') ist;
- Herstellung eines Kurzschlusskäfigs (22), der sich entlang der Längsachse (X-X') erstreckt und beinhaltend:
• zwei Kurzschlusskränze (24, 26), die beiderseits der magnetischen Masse (23) der Längsachse (X-X') folgend positioniert sind, und
• eine Vielzahl von elektrisch leitfähigen Stäben (28), die jeweils die zwei Kurzschlusskränze (24, 26) elektrisch verbinden, und
- Einführung mindestens eines elektrisch isolierenden Stopfens (35), wobei der oder die Stopfen (35) innerhalb der oder jeder Öffnung (34) so eingerichtet sind, dass sie die oder jede Öffnung (34) an mindestens einem Teil ihrer Länge, die der Längsachse (X-X') folgt, verschließen.

## Claims

1. A rotor (16) of an electric machine comprising:
- a magnetic mass (23) extending along a longitudinal axis (X-X') including a plurality of housings (32), each housing (32) being intended to receive a respective electrically-conductive bar (28), and at least over a portion of its length along the longitudinal axis (X-X') at least one opening (34) extending radially from one of the housings (32) and opening outwardly along a radial direction, substantially perpendicular to the longitudinal axis (X-X'), each opening being in the form of a groove whose cross-section perpendicular to the longitudinal axis (X-X') comprises :
• a first portion (52) with a substantially rectangular shape, the first portion (52) opening towards one of the housings (32), and
• a second portion (54) with a substantially trapezoidal shape into which the first portion (52) opens, the second portion (54) opens outwards of the magnetic mass along a radial direction,
- a short-circuit cage (22) extending along the longitudinal axis (X-X') and including:
• two short-circuit rings (24, 26) placed on either side of the magnetic mass (23) along the longitudinal axis (X-X'),
• a plurality of electrically-conductive bars (28), each electrically connecting the two short-circuit rings (24, 26),
**characterised in that** the rotor comprises at least one electrically-insulating plug (35), the plug(s) being arranged inside the or each opening so as to seal the or each opening over at least one portion of its length along the longitudinal axis.

2. The rotor according to claim 1, wherein each opening (34) extends over the entire length of the magnetic mass (23) along the longitudinal axis (X-X').

3. The rotor according to claim 1 or 2, wherein the magnetic mass (23) is delimited by a periphery along a plane perpendicular to the longitudinal axis (X-X'), each opening (34) extending between two longitudinal edges at the periphery of the magnetic mass (23), the distance between the two edges being comprised between 4 mm and 10 mm.

4. The rotor according to any one of claims 1 to 3, wherein the number of openings (34) is equal to the number of housings (32) and wherein each opening (34) extends radially from one of the respective housings (32) and opens outwards along a radial direction.

5. The rotor according to any one of claims 1 to 4, wherein the second portion (54) with a substantially trapezoidal shape includes a small radially external base and a large base, the small base being disposed outside the large base along the radial direction, and wherein the second portion (54) with a substantially trapezoidal shape comprises a side connecting the small base to the large base, said side forming with the height passing through one of the points of said side an angle comprised between 5° and 25°, preferably substantially equal to 15°.

6. An electric machine (10), in particular an asynchronous machine, particularly a motor (10), comprising a stator (14) and a rotor (16), **characterised in that** the rotor (16) is a rotor (16) according to any one of claims 1 to 5.

7. A method for manufacturing a rotor according to any one of claims 1 to 6, comprising a step of:
- making a magnetic mass (23) extending along a longitudinal axis (X-X') including:
• a plurality of housings (32), each housing (32) being able to receive a bar (28) from the plurality of bars (28),
• over at least one portion of its length along the longitudinal axis (X-X') at least one opening (34) extending radially from one of the housings (32) and opening outwardly along a radial direction substantially perpendicular to the longitudinal axis (X-X');
- making a short-circuit cage (22) extending along the longitudinal axis (X-X') and including:
• two short-circuit rings (24, 26) placed on either side of the magnetic mass (23) along the longitudinal axis (X-X'), and
• a plurality of electrically-conductive bars (28), each electrically connecting the two short-circuit rings (24, 26), and
- inserting at least one electrically-insulating plug (35), the plug(s) (35) being arranged inside the or each opening (34) so as to seal the or each opening (34) over at least one portion of its length along the longitudinal axis (X-X').
